# EUROPEAN PATENT SPECIFICATION

(11) **EP 3 564 045 B1**
(45) Date of publication and mention of the grant of the patent: **10.03.2021**
(21) Application number: 17886083.9
(22) Date of filing: 18.12.2017
(51) Int. Cl.: B60C 9/18, B60C 3/04, B60C 9/08, B60C 9/20, B60C 9/22, B60C 17/04

(54) **PNEUMATIC TIRE FOR MOTORCYCLES**
LUFTREIFEN FÜR MOTORRÄDER
PNEU POUR MOTOCYCLETTES

(30) Priority: 27.12.2016 JP 2016254423
(43) Date of publication of application: 06.11.2019
(73) Proprietor: Bridgestone Corporation, Chuo-Ku Tokyo 104-8340 (JP)
(72) Inventor: OSHIMA Masatomo, Tokyo 104-8340 (JP)
(74) Representative: Oxley, Robin John George
(86) International application number: PCT/JP2017/045297
(87) International publication number: WO 2018/123685

(56) References cited:
- EP-A1- 1 502 770
- EP-A1- 1 852 277
- JP-A- 2003 260 906
- JP-A- 2009 120 001
- JP-A- 2012 131 184
- JP-A- 2012 131 367
- JP-A- 2013 159 250
- JP-A- 2016 141 209
- JP-A- 2016 525 485

## Description

### TECHNICAL FIELD

The present invention relates to a pneumatic tire for motorcycles (hereinafter, also simply referred to as "tire"). More particularly, the present invention relates to a pneumatic tire for motorcycles which not only has satisfactory durability but also exhibits satisfactory grip performance when imparted with a large camber angle.

### BACKGROUND ART

During cornering of a motorcycle, a camber angle (CA) is applied to a tire by tilting the tire with respect to the road surface. In recent motorcycles, improvements in the vehicle performance, the grip performance of tire tread rubber and the like have made cornering at a large camber angle of nearly 60° possible.

In order to further ensure the grip performance in cornering that includes driving at such a large CA, it is critical to increase the ground contact area and, conventionally, the ground contact area is ensured by taking a variety of measures in terms of the crown shape of the tread portion, the tire internal structure and the like.

In racing tires that are capable of running at a high speed of nearly 300 km/h, in order to suppress the tire expansion caused by centrifugal force, a structure that includes a spiral belt formed by spirally winding a strip member, which is obtained by coating cords with a rubber, along the tire circumferential direction is generally employed.

With regard to the technologies relating to spiral belts, for example, Patent Documents 1 to 3 propose tires in which the spacing of reinforcing cords incorporated into a spiral belt is modified. In this manner, it is known that the driving stability, such as grip performance, can be modified by changing the density of reinforcing cords to be incorporated into a spiral belt.

### RELATED ART DOCUMENTS

### PATENT DOCUMENTS

[Patent Document 1] JPH10-86608A, [Patent Document 2] JP2014-201145A, [Patent Document 3] JP2015-174564A. Attention is also drawn to the disclosure of JP2016 141209, EP 1 502 770 and EP 1 852 277.

### SUMMARY OF THE INVENTION

### PROBLEMS TO BE SOLVED BY THE INVENTION

However, from the standpoint of suppressing the tire expansion, it is conventionally believed that the number and the spacing of cords incorporated into a spiral belt layer may be disadvantageous against rupture and breakage unless they are each at a certain level or higher. Accordingly, spiral belt layers are usually provided with a cord end count on the safe side. Further, with regard to street tires, since the center region is likely to receive an input when, for example, the tire goes over a bump or runs over a projection and, therefore, the number of cords to be incorporated cannot be reduced.

Meanwhile, the use of steel cords as the reinforcing cords of a spiral belt results in the loss of flexibility of the ground contact surface since the steel cords are less likely to buckle as compared to organic fiber cords and restrict the movement with each other when the number thereof is increased. In this manner, the use of steel cords as the reinforcing cords of a spiral belt creates an antinomic relation between the grip performance and the fracture characteristics.

In view of the above, an object of the present invention is to provide a pneumatic tire for motorcycles, which solves the above-described problems and not only has satisfactory durability but also exhibits satisfactory grip performance when imparted with a large camber angle.

### MEANS FOR SOLVING THE PROBLEMS

The present inventor intensively studied to solve the above-described problems and consequently discovered that, by defining an optimum range of steel cord arrangement, the ground contact area during rolling in a large CA range can be increased and the grip performance at large CAs can be ensured while securing the plunger energy satisfying a standard for street tires, thereby completing the present invention.

That is, the pneumatic tire for motorcycles according to the present invention is a pneumatic tire for motorcycles that includes: a tread portion formed in an annular shape; side wall portions and bead portions, which extend on the respective ends of the tread portion; a carcass composed of at least one carcass ply toroidally extending on a tire radial direction inner side of the tread portion; and a spiral belt composed of at least one spiral belt layer, which is arranged on a tire radial direction outer side of the carcass, wherein
the pneumatic tire has an aspect ratio of 80% to 40%,
the spiral belt is formed by spirally winding a ribbon-like strip, which is obtained by rubber-coating two paralleled steel cords, in the tire circumferential direction, in which spiral belt a spacing A between the two steel cords in the ribbon-like strip along the periphery of the spiral belt is 0.8 to 1.5 mm at a tire widthwise cross-section in a reference state where the pneumatic tire is mounted on an application rim and inflated to a prescribed internal pressure with no load being applied thereto, and the steel cords each have a tensile strength of 200 N to 1,000 N,
characterised in that
the spiral belt is composed of a closely spaced region M, in which a spacing B between the steel cords of adjacent ribbon-like strips along the periphery of the spiral belt is 0.8 to 2.5 mm, and loosely spaced regions S in which the spacing B is 3.5 to 6.0 mm, the closely spaced region M including a closely spaced region M1 that constitutes 10 mm or more and 50% or less of the length along the periphery of the spiral belt as centered at the tire equator.

The term "application rim" used herein is defined by an industrial standard that is valid in each region where the tire is manufactured and used, such as JATMA (Japan Automobile Tyre Manufacturers Association) Year Book in Japan, ETRTO (The European Tyre and Rim Technical Organisation) Standards Manual in Europe or TRA (The Tire and Rim Association Inc.) Year Book in the U.S., and refers to a standard rim of an applicable size ("Measuring Rim" in the ETRTO Standards Manual or "Design Rim" in the TRA Year Book). Further, the term "prescribed internal pressure" used herein refers to an internal pressure recommended by Bridgestone Corporation for each size of RMR manufactured by Bridgestone Corporation, which is in a cold-setting range of 150 kPa to 290 kPa. Moreover, the term "tensile strength" used herein refers to a value obtained by cutting out a spiral belt from a tire at a prescribed length, a prescribed width and a prescribed thickness, removing the rubber coated thereon, taking out one steel cord having a prescribed length, and then measuring the tensile strength for this steel cord. The tensile strength is measured by performing a tensile test in accordance with JIS G3510 and JIS Z2241 and defined as the maximum tensile load at break of the steel cord.

In the tire of the present invention, when the aspect ratio is 60% or lower, it is preferred that the closely spaced region includes closely spaced regions M2 of 5 to 15% of the length along the periphery of the spiral belt from the respective ends of the spiral belt.

### EFFECTS OF THE INVENTION

According to the present invention, a pneumatic tire for motorcycles, which not only has satisfactory durability but also exhibits satisfactory grip performance when imparted with a large camber angle, can be provided.

### BRIEF DESCRIPTION OF THE DRAWINGS

[FIG. 1] FIG. 1 is a widthwise schematic cross-sectional view illustrating a pneumatic tire for motorcycles according to one preferred embodiment of the present invention.
[FIG. 2] FIG. 2 is a drawing that schematically illustrates the spacing of steel cords in a spiral belt.
[FIG. 3] FIG. 3 is a widthwise schematic cross-sectional view illustrating a pneumatic tire for motorcycles according to another preferred embodiment of the present invention.

### MODE FOR CARRYING OUT THE INVENTION

The pneumatic tire for motorcycles according to the present invention will now be described in detail referring to the drawings.

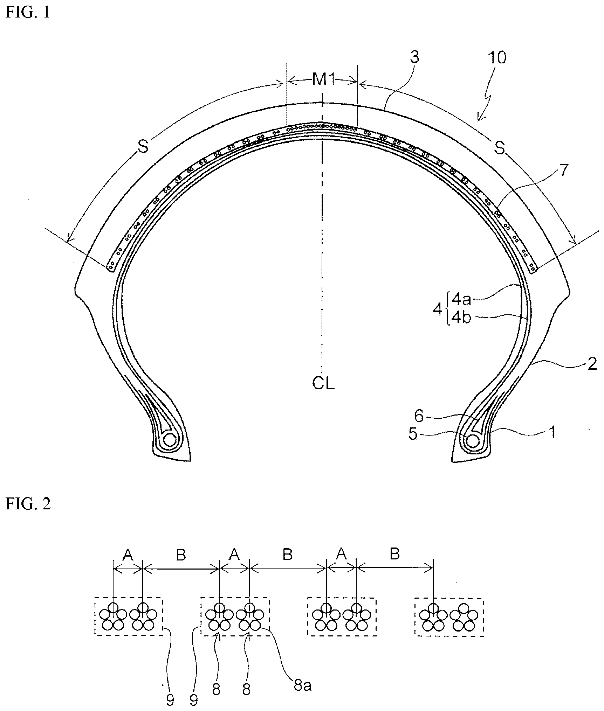

FIG. 1 is a widthwise schematic cross-sectional view illustrating a pneumatic tire for motorcycles according to one preferred embodiment of the present invention, and FIG. 2 is a drawing that schematically illustrates the spacing of steel cords in a spiral belt. A tire 10 of the present invention, which is a tire that includes a tread portion formed in an annular shape and has an aspect ratio of 80% to 40%, includes: a pair of bead portions 1; a pair of side wall portions 2, which extend from the respective bead portions 1 on the tire radial-direction outer side; a tread portion 3, which extends between the pair of the side wall portions 2 and has a circular-arc cross-sectional shape; and a carcass 4, which is composed of at least one carcass ply (two carcass plys 4a and 4b in the illustrated example) toroidally extending over the tread portion 3. In the illustrated tire 10, the carcass 4 is constituted by: a carcass main body which toroidally extends between a pair of bead cores 5 each embedded in the pair of the bead portions 1; and carcass folded parts, each of which extends from the carcass main body and is folded back from the inside to the outside in the tire width direction. Further, bead fillers 6 which have a substantially triangular cross-sectional shape are arranged on the tire radial direction outer side of the respective bead cores 5.

The tire 10 of the present invention has a spiral belt 7 which is composed of at least one spiral belt layer (one spiral belt layer in the illustrated example) arranged on the tire radial direction outer side of the carcass 4. This spiral belt 7 is formed by spirally winding (so-called bifilar winding) a ribbon-like strip 9, which is obtained by paralleling and rubber-coating two steel cords 8, in the tire circumferential direction. In the tire 10 of the present invention, the structure of the steel cords 8 is not particularly restricted, and a variety of twisted structures, such as 1×2, 1×3, 1×5 and 3×3, can be employed as long as the steel cords 8 have a tensile strength of 200 N to 1,000 N per cord. In the illustrated example, the steel cords 8 have a so-called 1×5 twisted structure in which five steel filaments are twisted together. When the tensile strength per steel cord is higher than 1,000 N, the ground contact area may be reduced due to an excessively high bending rigidity of the steel cords, whereas when the tensile strength is less than 200 N, sufficient fracture characteristics are not attained in some cases.

In the tire 10 of the present invention, the ribbon-like strip 9, which is obtained by rubber-coating the two paralleled steel cords 8, is spirally wound in the tire circumferential direction. When the ribbon-like strip is constituted by a single steel cord, since the steel cord spacing in the spiral belt is large, it is difficult to ensure sufficient durability. Meanwhile, when the ribbon-like strip is constituted by three or more steel cords, although the steel cords on the respective ends can be deformed in the tire width direction, since the steel cord(s) sandwiched by the steel cords of the respective ends cannot be deformed in the tire width direction and are rather deformed in the tire radial direction, sufficient grip performance cannot be ensured in some cases.

Further, in the tire 10 of the present invention, at a tire widthwise cross-section in a reference state where the tire 10 is mounted on an application rim and inflated to a prescribed internal pressure with no load being applied thereto, a spacing A between two steel cords 8 in the ribbon-like strip 9 along the periphery of the spiral belt 7 is 0.8 to 1.5 mm. The term "spacing A between two steel cords 8 in the ribbon-like strip 9 along the periphery of the spiral belt 7" used herein refers to the gap between the centers of the steel cords 8 contained in the ribbon-like strip 9 as illustrated in FIG. 2. By controlling the spacing A of the steel cords in the ribbon-like strip 9 to be 0.8 mm or larger, the deformation of the steel cords 8 in the tire width direction is facilitated while the deformation in the tire radial direction (deformation causing a so-called buckling phenomenon) is suppressed, whereby the ground contact area can be ensured to improve the grip performance. In addition, by controlling the spacing A of the steel cords in the ribbon-like strip 9 to be 1.5 mm or smaller, the tire durability can be ensured even when a spacing B of the steel cords in loosely spaced regions S is large at 6.0 mm, the details of which is described below. It is needless to say that the above-described numerical range includes a range generated by a manufacturing error.

Still further, in the tire 10 of the present invention, at a tire widthwise cross-section in a reference state where the tire 10 is mounted on an application rim and inflated to a prescribed internal pressure with no load being applied thereto, the spiral belt 7 is composed of a closely spaced region M, in which a spacing B between the steel cords 8 of adjacent ribbon-like strips 9 along the periphery of the spiral belt 7 is 0.8 to 2.5 mm, and loosely spaced regions S in which the spacing B is 3.5 to 6.0 mm, and at least 10 mm or more and 50% or less of the length along the periphery of the spiral belt 7 as centered at the tire equator CL is a closely spaced region M1. The term "spacing B between the steel cords 8 of adjacent ribbon-like strips 9 along the periphery of the spiral belt 7" used herein refers to the gap between the centers of the steel cords 8 contained in adjacent ribbon-like strips 9 as illustrated in FIG. 2. In this manner, by configuring the vicinity of the tire equator CL to be the closely spaced region M1, the durability of the vicinity of the tire equator CL against an input applied thereto when, for example, the tire 10 goes over a bump or runs over a projection, can be ensured.

When the spacing B in the closely spaced region M1 is smaller than 0.8 mm, not only two steel cords restrict the movement with each other and the flexibility of the ground contact surface is thereby deteriorated but also, since the smaller the crown R, the larger becomes the difference in circumferential length between the adjacent steel cords 8, buckling is more likely to occur within the ground contact surface, causing a reduction in the effective ground contact area. Meanwhile, when the spacing B is larger than 2.5 mm, the fracture characteristics in going over a bump or running over a projection are deteriorated. The spacing B is preferably 1.2 to 2.0 mm.

In the tire 10 of the present invention, portions other than the closely spaced region M of the spiral belt 7 are constituted by the loosely spaced regions S. By adopting this configuration, the ground contact area can be increased and the grip performance can thus be ensured also for the region that comes into contact with the ground when a large CA of not smaller than 60° is applied. In other words, by controlling the spacing B in the loosely spaced regions S to be 3.5 mm or larger, the deformation of the steel cords in the tire width direction is facilitated while the deformation in the tire radial direction is suppressed, whereby the ground contact area can be ensured to improve the grip performance. Meanwhile, by controlling the spacing B in the loosely spaced regions S to be 6.0 mm or smaller, the rigid feel in driving is ensured. The spacing B is preferably 4.0 mm to 5.0 mm. The grip performance can be further improved by controlling the spacing B to be 4.0 mm or larger, while the durability can be further improved by controlling the spacing B to be 5.0 mm or smaller.

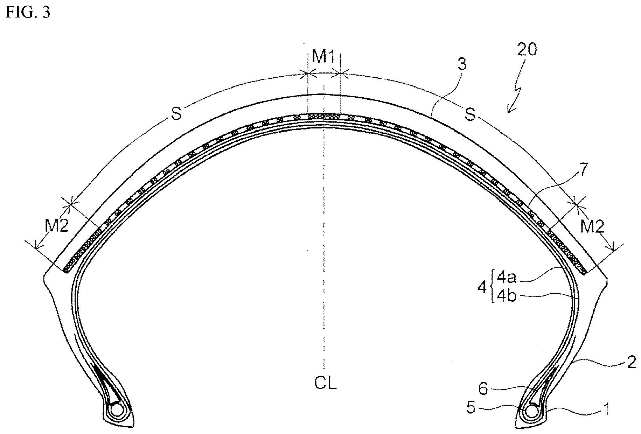

When the tire 10 of the present invention has an aspect ratio of 60% or lower, it is preferred that 5 to 15% of the length along the periphery of the spiral belt 7 from the respective ends of the spiral belt 7 be closely spaced regions M2. FIG. 3 is a widthwise schematic cross-sectional view illustrating a pneumatic tire for motorcycles according to another preferred embodiment of the present invention. When the aspect ratio of the tire is 60% or lower, the tensile load applied to the spiral belt in the center part tends to increase as the aspect ratio is decreased, and an aspect ratio of 100% brings the carcass ply into a state of bearing substantially all tension. Accordingly, the higher the aspect ratio of the tire, the less likely is the fracturing pressure to be affected by the cord spacing of the spiral belt 7. Therefore, in order to further ensure the grip performance in cornering that includes driving at a large CA, it is believed preferable to constitute the shoulder portions with the loosely spaced regions S.

However, in a tire having an aspect ratio of 60% or lower, the vicinity of the edges of the tread portion are more likely to be ruptured or broken than in a tire having an aspect ratio of higher than 60%. Therefore, in a tire 20 of the present invention, when the aspect ratio is 60% or lower, it is preferred that 5 to 15% of the length along the periphery of the spiral belt 7 from the respective ends of the spiral belt 7 be the closely spaced regions M2. In another embodiment of the present invention, the vicinity of the tire equator CL of the spiral belt 7 and both end portions of the spiral belt 7 are constituted by the closely spaced regions M (M1 and M2, respectively) and, in this case, in the closely spaced region M1 in the vicinity of the tire equator CL of the spiral belt 7 and the closely spaced regions M2 of the respective end portions, the spacing B is not necessarily required to be the same and can be designed as appropriate. It is noted here that this does not present a problem in tires having an aspect ratio of higher than 60% but 80% or lower.

In the tire 10 of the present invention, what is important is only that the aspect ratio and the configuration of the spiral belt 7 satisfy the above-described respective requirements, and there is no other particular restriction. For example, in the illustrated examples, the ends of the carcass 4 are folded around the respective bead cores 5 from the inside to the outside in the tire width direction to be anchored; however, the ends of the carcass 4 may each be sandwiched from both sides and anchored by bead wires constituting each bead core 5. In addition, the carcass 4 may be a radial carcass that is formed by rubber-coating plural ply cords arranged obliquely at a prescribed angle of, for example, 70° to 90°, with respect to the tread circumferential direction. As the cords constituting this radial carcass, textile cords (synthetic fiber cords) having a relatively high elasticity can be used.

Further, a belt composed of a belt layer inclined with respect to the circumferential direction may be provided on the tire radial-direction outer side of the carcass 4 but on the tire radial-direction inner side of the spiral belt 7. A belt cord of this belt is also not particularly restricted, and any known non-extensible high-elasticity cord can be used. For example, an aromatic aramid cord or a steel cord can be suitably used. Moreover, in the tire of the present invention, an inner liner may be arranged as the innermost layer, and a tread pattern may be formed on the surface of the tread portion as appropriate.

### EXAMPLES

The tire of the present invention will now be described in more detail by way of examples thereof.

### <Examples 1-1 to 1-5 and Comparative Examples 1-1 to 1-6>

Tires of the type illustrated in FIG. 1 were produced at a tire size of 120/70R17. The number of steel cords in the ribbon-like strip, the tensile strength of the steel cords, the spacing A, the spacing B in the closely spaced region M1 and the loosely spaced regions S, and the position of the closely spaced region M1 were as shown in Table 1 below. It is noted here that, in the spiral belt, the regions other than the closely spaced region M1 were constituted by the loosely spaced regions S. For each of the thus obtained tires, the durability against rupture and breakage as well as the grip performance were evaluated in accordance with the below-described procedures. The length of the spiral belt along the periphery was 120 mm.

### <Examples 2-1 to 2-5 and Comparative Examples 2-1 and 2-2>

Tires of the type illustrated in FIG. 3 were produced at a tire size of 200/55R17. The number of steel cords in the ribbon-like strip, the tensile strength of the steel cords, the spacing A, the spacing B in the closely spaced regions M (M1 and M2) and the loosely spaced regions S, and the positions of the closely spaced regions M (M1 and M2) were as shown in Table 2 below. It is noted here that, in the spiral belt, the regions other than the closely spaced regions M (M1 and M2) were constituted by the loosely spaced regions S. For each of the thus obtained tires, the plunger durability, the hydraulic breaking strength and the grip performance were evaluated in accordance with the below-described procedures. The length of the spiral belt along the periphery was 200 mm.

### <Plunger Durability>

Each tire was mounted on an application rim and inflated to a prescribed internal pressure. In accordance with the breaking energy test prescribed in JIS D4230, a plunger was pressed against the closely spaced region M in the vicinity of the equator of the tread portion, and the pressing force and the displacement of the plunger immediately before the breakage of the tire were examined, after which the product of the pressing force and the displacement was calculated to evaluate the plunger durability. The calculated values were converted into index values taking the result of Comparative Example 1-1 as 100, and relative evaluations were made at each size. An evaluation of 90 or higher was regarded as satisfactory. A larger value means superior plunger durability. The results are shown in Tables 1 to 3.

### <Hydraulic Breaking Strength>

Each tire was mounted on an application rim, and the hydraulic breaking strength was evaluated by slowly injecting water, instead of air, into the tire and measuring the water pressure when the tire was broken. The measured values were converted into index values taking the in-house lower limit value as 100, and relative evaluations were made. An evaluation of 100 or higher was regarded as satisfactory. A larger value means superior and more favorable breaking strength. The results are also shown in Tables 1 to 3.

### <Grip Performance>

Each tire was mounted on an application rim and inflated to a prescribed internal pressure, and the grip performance at a large camber angle was evaluated based on the feeling of a rider who drove on a closed circuit. The rider's feeling was converted into index values taking the result of Comparative Example 1-1 as 100, and relative evaluations were made at each size. A larger value means superior grip performance. The results are also shown in Tables 1 to 3.

**[Table 1]**

| | Comparative Example 1-1 | Comparative Example 1-2 | Example 1-1 | Example 1-2 | Example 1-3 | Example 1-4 |
|---|---|---|---|---|---|---|
| Aspect ratio (%) | 70 | 70 | 70 | 70 | 70 | 70 |
| Number of steel cords* | 2 | 2 | 2 | 2 | 2 | 2 |
| Tensile strength of steel cords (N) | 500 | 500 | 500 | 500 | 500 | 500 |
| Spacing A (mm) | 1.3 | 1.3 | 1.3 | 1.3 | 1.3 | 1.3 |
| Spacing in closely spaced region M1 | 2.5 | 6.0 | 2.5 | 2.5 | 2.5 | 2.5 |
| Spacing in loosely spaced regions S | 2.5 | 6.0 | 3.5 | 4.5 | 6.0 | 6.0 |
| Position of closely spaced region M1 | - | - | 10 | 25 | 10 | 50 |
| Plunger durability (index) | 100 | 50 | 98 | 100 | 100 | 100 |
| Hydraulic breaking strength (index) | 110 | 100 | 104 | 106 | 102 | 108 |
| Grip performance (index) | 100 | 130 | 120 | 125 | 130 | 110 |

| | | | | | | |
|---|---|---|---|---|---|---|
| *: Number of steel cords in ribbon-like strip | | | | | | |

**[Table 2]**

| | Example 1-5 | Comparative Example 1-3 | Comparative Example 1-4 | Comparative Example 1-5 | Comparative Example 1-6 |
|---|---|---|---|---|---|
| Aspect ratio (%) | 70 | 70 | 70 | 70 | 70 |
| Number of steel cords* | 2 | 2 | 2 | 2 | 2 |
| Tensile strength of steel cords (N) | 500 | 500 | 500 | 500 | 500 |
| Spacing A (mm) | 1.5 | 2.0 | 1.3 | 1.3 | 1.3 |
| Spacing in closely spaced region M1 | 2.5 | 2.5 | 4.0 | 2.5 | 2.5 |
| Spacing in loosely spaced regions S | 6.0 | 6.0 | 6.0 | 8.0 | 6.0 |
| Position of closely spaced region M1 | 50 | 10 | 10 | 10 | 80 |
| Plunger durability (index) | 96 | 88 | 65 | 100 | 100 |
| Hydraulic breaking strength (index) | 106 | 96 | 100 | 98 | 109 |
| Grip performance (index) | 112 | 135 | 132 | 128 | 106 |

**[Table 3]**

| | Comparative Example 2-1 | Comparative Example 2-2 | Example 2-1 | Example 2-2 | Example 2-3 | Example 2-4 | Example 2-5 |
|---|---|---|---|---|---|---|---|
| Aspect ratio (%) | 55 | 55 | 55 | 55 | 55 | 55 | 55 |
| Number of steel cords * | 2 | 2 | 2 | 2 | 2 | 2 | 2 |
| Tensile strength of steel cords (N) | 500 | 500 | 500 | 500 | 500 | 500 | 500 |
| Spacing A (mm) | 1.3 | 1.3 | 1.3 | 1.3 | 1.3 | 1.3 | 1.3 |
| Spacing in closely spaced regions M | 1.8 | 6.0 | 1.8 | 1.8 | 1.8 | 1.8 | 1.8 |
| Spacing in loosely spaced regions S | 1.8 | 6.0 | 3.5 | 4.5 | 6.0 | 6.0 | 6.0 |
| Position of closely spaced region M1 | 0 | 0 | 10 | 40 | 100 | 10 | 40 |
| Position of closely spaced region M2 | 0 | 0 | 10 | 20 | 30 | 40 | 40 |
| Plunger durability (index) | 100 | 70 | 95 | 100 | 100 | 95 | 100 |
| Hydraulic breaking strength (index) | 120 | 50 | 100 | 110 | 115 | 116 | 118 |
| Grip performance (index) | 100 | 130 | 125 | 120 | 110 | 105 | 100 |

From Tables 1 to 3 above, it is seen that the tires according to the present invention not only had satisfactory durability but also exhibited satisfactory grip performance when imparted with a large camber angle. Moreover, from Table 2, it is seen that, even in those tires having an aspect ratio of 60% or lower, neither rupture nor breakage occurred in the vicinity of the edges of the tread portion.

### DESCRIPTION OF SYMBOLS

1: bead portion
2: side wall portion
3: tread portion
4: carcass
4a, 4b: carcass ply
5: bead core
6: bead filler
7: spiral belt
8: steel cord
8a: steel filament
9: ribbon-like strip
10, 20: pneumatic tire for motorcycles (tire)

## Claims

1. A pneumatic tire for motorcycles (10, 20), comprising:
a tread portion (3) formed in an annular shape;
side wall portions (2) and bead portions (1), which extend on the respective ends of the tread portion (3);
a carcass (4) composed of at least one carcass ply (4a, 4b) toroidally extending on a tire radial-direction inner side of the tread portion (3); and
a spiral belt (7) composed of at least one spiral belt layer, which is arranged on a tire radial-direction outer side of the carcass (4),
wherein
the pneumatic tire (10, 20) has an aspect ratio of 80% to 40%,
the spiral belt (7) is formed by spirally winding a ribbon-like strip (9), which is obtained by rubber-coating two paralleled steel cords (8), in the tire circumferential direction, in which spiral belt a spacing A between the two steel cords (8) in the ribbon-like strip (9) along the periphery of the spiral belt (7) is 0.8 to 1.5 mm at a tire widthwise cross-section in a reference state where the pneumatic tire (10, 20) is mounted on an application rim and inflated to a prescribed internal pressure with no load being applied thereto, and
the steel cords (8) each have a tensile strength of 200 N to 1,000 N,
**characterised in that** the spiral belt (7) is composed of a closely spaced region M, in which a spacing B between the steel cords (8) of adjacent ribbon-like strips along the periphery of the spiral belt (7) is 0.8 to 2.5 mm, and loosely spaced regions S in which the spacing B is 3.5 to 6.0 mm, the closely spaced region M comprising a closely spaced region M1 that constitutes 10 mm or more and 50% or less of the length along the periphery of the spiral belt (7) as centered at the tire equator.

2. The pneumatic tire (10, 20) for motorcycles according to claim 1, wherein
the pneumatic tire (10, 20) has an aspect ratio of 60% or lower, and
the closely spaced region comprises closely spaced regions M2 of 5 to 15% of the length along the periphery of the spiral belt (7) from the respective ends of the spiral belt (7).

## Patentansprüche

1. Luftreifen (10, 20) für Motorräder, der Folgendes umfasst:
einen Laufflächenabschnitt (3), der in einer ringförmigen Gestalt geformt ist,
Seitenwandabschnitte (2) und Wulstabschnitte (1), die sich an den jeweiligen Enden des Laufflächenabschnitts (3) erstrecken,
eine Karkasse (4), die aus mindestens einer Karkassenlage (4a, 4b) besteht, die sich kreisringförmig auf einer in Reifenradialrichtung inneren Seite des Laufflächenabschnitts (3) erstreckt, und
einen Spiralgürtel (7), der aus mindestens einer Spiralgürtellage besteht, die auf einer in Reifenradialrichtung äußeren Seite der Karkasse (4) angeordnet ist,
wobei
der Luftreifen (10, 20) ein Querschnittsverhältnis von 80 % bis 40 % aufweist,
der Spiralgürtel (7) durch spiraliges Wickeln eines bandartigen Streifens (9) geformt ist, der durch Gummibeschichten zweier parallel angeordneter Stahlkords (8), in der Reifenumfangsrichtung, erhalten wird, wobei in dem Spiralgürtel ein Abstand A zwischen den zwei Stahlkords (8) in dem bandartigen Streifen (9) entlang des Umfangs des Spiralgürtels (7) 0,8 bis 1,5 mm bei einem Reifenbreiten-Querschnitt beträgt, in einem Referenzzustand, in dem der Luftreifen (10, 20) auf einer Anwendungsfelge montiert und bis zu einem vorgeschriebenen Innendruck aufgeblasen ist, wobei keine Last auf denselben ausgeübt wird, und
die Stahlkords (8) jeweils eine Zugfestigkeit von 200 N bis 1 000 N aufweisen,
**dadurch gekennzeichnet, dass** der Spiralgürtel (7) aus einem dicht beabstandeten Bereich M, in dem ein Abstand B zwischen den Stahlkords (8) benachbarter bandartiger Streifen entlang des Umfangs des Spiralgürtels (7) 0,8 bis 2,5 mm beträgt, und aus locker beabstandeten Bereichen S, in denen der Abstand B 3,5 bis 6,0 mm beträgt, besteht, wobei der dicht beabstandete Bereich M einen dicht beabstandeten Bereich M1, der 10 mm oder mehr und 50 % oder weniger der Länge entlang des Umfangs des Spiralgürtels (7), zentriert an dem Reifenäquator, umfasst.

2. Luftreifen (10, 20) für Motorräder nach Anspruch 1, wobei
der Luftreifen (10, 20) ein Querschnittsverhältnis von 60 % oder weniger aufweist und
der dicht beabstandete Bereich dicht beabstandete Bereiche M2 von 5 bis 15 % der Länge entlang des Umfangs des Spiralgürtels (7) von den jeweiligen Enden des Spiralgürtels (7) umfasst.

## Revendications

1. Bandage pneumatique (10, 20) pour motocycles, comprenant :
une partie de bande de roulement (3) formée en une forme annulaire ;
des parties de tringle (2) et des parties de talon (1), s'étendant sur les extrémités respectives de la partie de bande de roulement (3) ;
une carcasse (4) composée d'au moins une nappe de carcasse (4a, 4b) s'étendant toroïdalement sur un côté interne, dans la direction radiale du bandage pneumatique, de la partie de bande de roulement (3) ; et
une ceinture en spirale (7) composée d'au moins une couche de ceinture en spirale, agencée sur un côté externe, dans la direction radiale du bandage pneumatique, de la carcasse (4) ;
dans lequel :
le bandage pneumatique (10, 20) présente un rapport d'aspect compris entre 80% et 40% ;
la ceinture en spirale (7) est formée par enroulement en spirale d'une bande en forme de ruban (9), formée par revêtement de caoutchouc de deux câblés en acier (8) agencés en parallèle, dans la direction circonférentielle du bandage pneumatique, un espacement A dans cette ceinture en spirale entre les deux câblés en acier (8) dans la bande en forme de ruban (9), le long de la périphérie de la ceinture en spirale (7) étant de 0,8 à 1,5 mm au niveau d'une section transversale, dans un sens de la largeur du bandage pneumatique, dans un état de référence dans lequel le bandage pneumatique (10, 20) est monté sur une jante d'application et gonflé à une pression interne prescrite, aucune charge n'y étant appliquée ; et
les câblés en acier (8) présentent chacun une résistance à la traction de 200 N à 1.000 N ;
**caractérisé en ce que** la ceinture en spirale (7) est composée d'une région à espacement étroit M, dans lequel un espacement B entre les câblés en acier (8) de bandes en forme de ruban adjacentes, le long de la périphérie de la ceinture en spirale (7) étant de 0,8 à 2,5 mm, et de régions à espacement faible S, dans lesquelles l'espacement B est de 3,5 à 6,0 mm, la région à espacement étroit M comprenant une région à espacement étroit M1 constituant 10 mm ou plus et 50% ou moins de la longueur le long de la périphérie de la ceinture en spirale (7), centrée au niveau de l'équateur du bandage pneumatique.

2. Bandage pneumatique (10, 20) pour motocycles selon la revendication 1, dans lequel
le bandage pneumatique (10, 20) présente un rapport d'aspect de 60% ou moins ; et
la région à espacement étroit comprend des régions à espacement étroit M2 représentant 5 à 15% de la longueur le long de la périphérie de la ceinture en spirale (7) à partir des extrémités respectives de la ceinture en spirale (7).
